# EUROPÄISCHE PATENTANMELDUNG

(11) **EP 4 764 200 A1**
(43) Veröffentlichungstag der Anmeldung: **24.06.2026**
(21) Anmeldenummer: 25216809.1
(22) Anmeldetag: 19.11.2025
(51) Int. Cl.: F03D 1/00, F03D 15/00, F03D 80/80

(54) **BEFESTIGUNGSANORDNUNG UND WINDKRAFTANLAGE**

(30) Priorität: 20.12.2024 DE 102024212230
(71) Anmelder: ZF Friedrichshafen AG, 88046 Friedrichshafen (DE); ZF Wind Power Antwerpen NV, 3920 Lommel (BE)
(72) Erfinder: Patel, Priyangu, 88046 Friedrichshafen (DE); De Laet, Wim, 2000 Antwerpen (DE); Marrant, Benjamin, 1970 Wezembeek-Oppem (DE)
(74) Vertreter: ZF Friedrichshafen AG

(57) **Zusammenfassung**

Die Erfindung betrifft eine Befestigungsanordnung zum Befestigen eines Antriebsstrangs an einer Windkraftanlage (10). Die Befestigungsanordnung weist ein Gehäuse (40), ein erstes Lager (18) und ein zweites Lager (38) auf, mittels welchem eine Rotorwelle (16) drehbar an dem Gehäuse (40) gelagert ist. Das erste Lager (18) ist axial an einem rotorseitigen Endbereich (50) des Gehäuses (40) angeordnet. Das zweite Lager (38) ist axial an einem generatorseitigen Endbereich (52) des Gehäuses (40) angeordnet. Die Befestigungsanordnung weist einen ersten Befestigungsbereich (60) in einem ersten Axialbereich (54) und einen zweiten Befestigungsbereich (62) in einem zweiten Axialbereich (56) auf. Das Gehäuse (40) ist an den Befestigungsbereichen an einer Gondel (20) der Windkraftanlage (10) befestigbar. Der zweite Axialbereich (56) ist zu dem generatorseitigen Endbereich (52) axial beabstandet. Zudem bezieht sich die Erfindung auf eine Windkraftanlage (10).

## Beschreibung

Die vorliegende Erfindung bezieht sich auf eine Befestigungsanordnung für einen Antriebsstrang einer Windkraftanlage. Zudem bezieht sich die Erfindung auf eine Windkraftanlage.

### Stand der Technik

Windkraftanlagen dienen dazu, aus Windenergie Elektrizität zu erzeugen. Zu diesem Zweck weisen Windkraftanlagen einen Rotor auf. Eine Drehgeschwindigkeit des Rotors wird von einer Rotorwelle an ein Getriebe übertragen. Die Drehgeschwindigkeit der Rotorwelle wird dabei durch das Getriebe in eine geeignete Drehzahl übersetzt, um einen Generator anzutreiben. Eine Drehzahl und die an dem Rotor wirkende Lasten können im Betrieb der Windkraftanlage schwanken, beispielsweise aufgrund von Windböen. Dadurch kann es zu Schwingungen in einem Antriebsstrang der Windkraftanlage kommen, welche unerwünschte akustische Effekte wie Geräusche verursachen können. Zudem können diese unregelmäßigen Lasten Teile der Windkraftanlage, wie den Turm, verformen und zum Schwingen anregen. Der Turm kann beispielsweise als Hohlkörper ausgebildet sein und durch dessen Verformungen und Schwingungen ebenfalls unerwünschte akustische Effekte, wie Geräusche, verursachen. Zudem können Schwingungen und Verformungen einen Verschleiß erhöhen und eine Systemeffizienz senken.

Diese Effekte werden durch eine Platzierung von Lagern für eine Rotorwelle oder andere Komponenten des Antriebsstrangs der Windkraftanlage beeinflusst. Allerdings müssen die Lager dabei auch nach auftretenden Belastungen angeordnet werden, um die jeweiligen Komponenten des Antriebsstrangs ausreichend zu stützen. Deshalb werden zur Schwingungsreduktion Komponenten des Antriebsstrangs, wie die Rotorwelle mit einer Eingangswelle des Generators, oft elastisch verbunden. Solche elastischen Verbindungen können jedoch schnell verschleißen und beispielsweise nur bei einer aufwendigen Bauweise ausreichend hohe Lasten übertragen. Zudem ist eine separate Befestigung von den elastisch verbundenen Komponenten mit der restlichen Windkraftanlage erforderlich, wodurch zusätzliche Lager erforderlich sein können und ein Gewicht und eine Komplexität der Anlage steigen kann.

### Darstellung der Erfindung

Ein erster Aspekt betrifft eine Befestigungsanordnung zum Befestigen eines Antriebsstrangs an einer Windkraftanlage. Die Windkraftanlage kann einen Turm und eine daran angeordnete Gondel aufweisen. Der Turm erstreckt sich beispielsweise mit seiner Längserstreckung in eine vertikale Richtung. Die Gondel kann beispielsweise drehbar oder drehfest an dem Turm gelagert sein. Die Gondel kann beispielsweise oberseitig an dem Turm angeordnet sein. Der Turm kann beispielsweise hohl ausgebildet sein. Der Turm kann sich zu seinem oberen Ende hin verjüngen. Der Turm kann also beispielsweise konisch zu seinem freien Ende zulaufen. Der Turm kann auch zylindrisch sein. Der Turm kann einen runden, ovalen oder eckigen Querschnitt aufweisen. Der Turm kann beispielsweise aus mehreren aufeinander gestapelten Turmelementen gebildet sein. Der Turm kann beispielsweise Stahl und alternativ oder zusätzlich Beton als Werkstoff aufweisen.

Die Windkraftanlage kann beispielsweise einen Rotor, ein Getriebe und einen Generator aufweisen. Der Rotor kann über das Getriebe den Generator antreiben, um elektrische Energie zu erzeugen. Der Rotor ist beispielsweise mit dem Getriebe über eine Rotorwelle verbunden. Der Rotor, das Getriebe und der Generator können beispielsweise an einer Gondel der Windkraftanlage befestigt sein, beispielsweise gemeinsam durch eine Hauptlagerung. Der Rotor kann eine horizontale oder eine vertikale Drehachse aufweisen. Der Rotor kann beispielsweise zwei, drei, vier oder mehr Rotorblätter aufweisen, welche über eine Nabe mit der Rotorwelle verbunden sind. Die Rotorwelle, das Getriebe und der Generator können beispielsweise Teile des Antriebsstrangs sein. Der Antriebsstrang kann optional auch den Rotor und alternativ oder zusätzlich die Bremse aufweisen.

Die Befestigungsanordnung weist ein Gehäuse, ein erstes Lager und ein zweites Lager auf. Das Gehäuse kann an der Gondel befestigt sein, beispielsweise durch eine Verschraubung mit einem Maschinenbett. Die Lager können beispielsweise als Wälzlager ausgebildet sein. Geeignete Lager sind beispielsweise Kegelrollenlager oder Gleitlager. Die Rotorwelle ist mittels der zwei Lager drehbar an dem Gehäuse gelagert. So kann die Rotorwelle an der Gondel gestützt werden. Die Lager können beispielsweise in dem Gehäuse angeordnet sein. Die Gondel kann beispielsweise das Maschinenbett aufweisen, an welchem der Antriebsstrang befestigt ist. Das Gehäuse und die beiden Lager können eine Hauptlagerung des Antriebsstrangs ausbilden. Die Hauptlagerung kann frei von weiteren Lagern sein. Die Rotorwelle kann nur über die Hauptlagerung an der Gondel gelagert sein. Das Getriebe kann beispielsweise ebenfalls nur über die Hauptlagerung an der Gondel gelagert sein. Dann sind beispielsweise stationäre Bauteile des Gehäuses, wie ein Getriebegehäuse, an dem Gehäuse befestigt. Wenigstens ein drehbares Teil, wie eine Eingangswelle des Getriebes, kann über die Rotorwelle an den beiden Lagern gelagert sein. Optional kann auch der Generator nur über die Hauptlagerung an der Gondel gelagert sein, beispielsweise mittelbar über das Getriebe.

Das Gehäuse kann einstückig ausgebildet sein. Das Gehäuse kann ein Gußbauteil oder auch ein Schmiedeteil sein. Das erste Lager ist axial an einem rotorseitigen Endbereich des Gehäuses angeordnet. Das erste Lager bildet beispielsweise ein rotorseitiges Lager. Das zweite Lager ist axial an einem generatorseitigen Endbereich des Gehäuses angeordnet. Das zweite Lager bildet beispielsweise ein generatorseitiges Lager. Die beiden Lager können axial zueinander beabstandet sein. Die beiden Lager können koaxial angeordnet sein. In dem Axialbereich, in welchem die beiden Lager angeordnet sind, kann das Gehäuse jeweils verdickt und alternativ oder zusätzlich versteift ausgebildet sein. Das Gehäuse kann einen geschlossenen umlaufenden Ringbereich in dem Axialbereich aufweisen, in welchem die beiden Lager jeweils angeordnet sind. Die axiale Richtung und eine radiale Richtung kann durch die Drehachse der Rotorwelle und alternativ oder zusätzlich durch die Drehachse der beiden Lager definiert sein. Die beiden Lager können beispielsweise jeweils mit einer Lospassung, Übergangspassung oder Presspassung mit einem Außenring in dem Gehäuse befestigt sein. Die beiden Lager können beispielsweise jeweils mit einer Lospassung, Übergangspassung oder Presspassung mit einem Innenring an der Rotorwelle befestigt sein.

Die Befestigungsanordnung weist einen ersten Befestigungsbereich in einem ersten Axialbereich auf. Die Befestigungsanordnung weist einen zweiten Befestigungsbereich in einem zweiten Axialbereich auf. Das Gehäuse ist an den Befestigungsbereichen an einer Gondel der Windkraftanlage befestigbar. Jeder der beiden Befestigungsbereiche kann beispielsweise durch ein oder mehrere Befestigungsschnittstellen definiert sein, mit welchen das Gehäuse mit der Gondel verbundbar ist und im montierten Zustand an der Gondel befestigt ist. Die Befestigungsschnittstellen können an einem gondelseitigen Endbereich jeweils eines Tragarms ausgebildet sein. Die Tragarme können mit dem Gehäuse verbunden sein. Das Gehäuse oder andere Bauteile, wie Tragarme, weisen beispielsweise jeweils wenigstens eine antriebsstrangseitige Befestigungsschnittstelle in dem ersten Axialbereich und dem zweiten Axialbereich auf. Dabei kann es sich um einen Flansch, Absatz oder auch nur um einen Abschnitt des Gehäuses der Hauptlagerung handeln, mit welchem der Antriebsstrang an der Gondel befestigt wird. Die Befestigungsschnittstellen können beispielsweise eine Auflagefläche aufweisen. Die Auflagefläche kann beispielsweise auf einem Teil der Gondel aufliegen, wie dem Maschinenbett. Die antriebsstrangseitigen Befestigungsschnittstellen können Durchgangsöffnungen für Befestigungsmittel, wie Schrauben oder Nieten, aufweisen. Die Gondel kann zu jeder antriebstrangseitigen Befestigungsschnittstelle korrespondierende Befestigungsschnittstellen aufweisen. Beispielsweise kann das Maschinenbett eine zugeordnete Auflagefläche für jede Auflagefläche der antriebsstrangseitigen Auflagefläche aufweisen. Die gondelseitige Befestigungsschnittstelle kann Durchgangsöffnungen für Befestigungsmittel, wie Schrauben oder Nieten, aufweisen. Die beiden Axialbereiche bzw. die beiden Befestigungsbereiche können axial zueinander beabstandet sein.

Der Antriebsstrang kann an den Befestigungsschnittstellen mit der Gondel verbunden sein, beispielsweise an der korrespondierenden gondelseitigen Schnittstelle. Beispielsweise sind die antriebsstrangseitigen Befestigungsschnittstellen mit den gondelseitigen Schnittstellen verschraubt bzw. verschraubbar. Es kann auch eine unlösbare Verbindung vorgesehen sein, wie eine Verschweißung an den Befestigungsschnittstellen.

Der zweite Axialbereich ist zu dem generatorseitigen Endbereich axial beabstandet. Damit ist beispielsweise der zweite Befestigungsbereich auch zu dem zweiten Lager axial beabstandet. Beispielsweise kann der zweite Befestigungsbereich axial näher zu dem Rotor angeordnet sein. Beispielsweis kann der zweite Befestigungsbereich axial zwischen dem ersten Endbereich und dem zweiten Endbereich angeordnet sein. So kann eine lastgerechtere Position des zweiten Befestigungsbereichs und des zweiten Lagers vorgegeben werden. Der erste Axialbereich ist beispielsweise in dem rotorseitigen Endbereich axial angeordnet. Damit ist der erste Befestigungsbereich dann zu dem ersten Lager axial nicht beabstandet. So können hohe in Hochrichtung wirkende Lasten aufgrund des Gewichts des Rotors gut abgestützt werden.

In einer Ausführungsform der Befestigungsanordnung kann es vorgesehen sein, dass das Gehäuse in einem Axialbereich zwischen dem zweiten Befestigungsbereich und dem generatorseitigen Endbereich flexibel ausgebildet ist. Beispielsweise kann das Gehäuse in diesem Axialbereich durch Durchbrüche und alternativ oder zusätzlich durch eine dünne umlaufende Wand gezielt geschwächt werden. Das Gehäuse kann sich in diesem Axialbereich beispielsweise im bestimmungsgemäßen Gebrauch elastisch verformen, ohne dass es zu einer plastischen Verformung kommt. Das Gehäuse kann in diesem Axialbereich auch ein flexibleres Material aufweisen als in anderen Axialbereichen. Dadurch kann eine Schwingungsübertragung von dem zweiten Lager auf die Gondel reduziert werden. Das Gehäuse kann auch durch Tragarme, welche sich von dem Gehäuse wegerstrecken und Befestigungsschnittstellen ausbilden, versteift sein.

In einer Ausführungsform der Befestigungsanordnung kann es vorgesehen sein, dass das Gehäuse in dem Axialbereich zwischen dem zweiten Befestigungsbereich und dem generatorseitigen Endbereich flexibler als in einem Axialbereich zwischen dem rotorseitigen Endbereich und dem zweiten Befestigungsbereich ist. Das Gehäuse kann zwischen dem rotorseitigen Endbereich und dem zweiten Befestigungsbereich beispielsweise steifer ausgebildet sein als zwischen dem zweiten Befestigungsbereich und dem generatorseitigen Endbereich. Beispielsweise kann das Gehäuse zwischen dem rotorseitigen Endbereich und dem zweiten Befestigungsbereich weniger Durchbrüche und alternativ oder zusätzlich dickere Wände aufweisen als zwischen dem zweiten Befestigungsbereich und dem generatorseitigen Endbereich. Es kann hier auch ein steiferes Material genutzt werden.

In einer Ausführungsform der Befestigungsanordnung kann es vorgesehen sein, dass eine Flexibilität des Gehäuses durch Durchbrüche vorgegeben ist. Ein Durchbruch kann beispielsweise durch eine Durchgangsöffnung in einer umlaufenden Wand gebildet sein. Beispielsweise kann das Gehäuse in dem Bereich zwischen dem zweiten Befestigungsbereich und dem generatorseitigen Endbereich mehr oder größere Durchgangsöffnungen als zwischen dem rotorseitigen Endbereich und dem zweiten Befestigungsbereich aufweisen. Zwischen dem rotorseitigen Endbereich und dem zweiten Befestigungsbereich kann das Gehäuse auch frei von Durchbrüchen in seiner umlaufenden Wand sein. Das Gehäuse kann so besonders leicht sein und einfach einstückig ausgebildet sein. Zudem können so die Lager einfach zur Wartung und Montage zugänglich sein.

In einer Ausführungsform der Befestigungsanordnung kann es vorgesehen sein, dass die Befestigungsanordnung wenigstens eine Befestigungsschnittstelle in jedem Befestigungsbereich ausbildet. Wenigstens eine der Befestigungsschnittstellen kann über einen Tragarm mit dem Gehäuse verbunden sein. Es können auch mehrere oder alle Befestigungsschnittstellen durch Tragarme ausgebildet sein. Sofern mehrere Tragarme vorgesehen sind, können die Ausführungen zu dem Tragarm für einige oder alle dieser Tragarme gleichermaßen gelten. Beispielsweise können in dem zweiten Axialbereich zwei Befestigungsschnittstellen durch jeweils einen zugeordneten Tragarm ausgebildet werden. Die Tragarme können einstückig mit dem Gehäuse ausgebildet sein. Die Tragarme können auch an dem Gehäuse befestigt sein, beispielsweise durch eine Verschraubung oder Verschweißung. Die Tragarme können einteilig oder mehrteilig ausgebildet sein. Durch die Tragarme kann eine axiale Position der Befestigungsschnittstellen frei zu dem Gehäuse und damit auch einer axialen Position der Lager vorgegeben werden. Zudem kann ein steifer Teil des Gehäuses, wie die Endbereiche mit den Lagern, zur Anbringung der Tragarme und damit zuverlässigen Lastübertragung genutzt werden. Einige der Tragarme können sich beispielsweise teilweise axial erstrecken.

In einer Ausführungsform der Befestigungsanordnung kann es vorgesehen sein, dass der Tragarm flexibel ausgebildet ist. Beispielsweise kann der Tragarm dünn genug sein, um sich im bestimmungsgemäßen Gebrauch elastisch zu verformen, ohne dass es zu einer plastischen Verformung kommt. Der Tragarm kann dafür eine entsprechende geometrische Gestaltung aufweisen und alternativ oder zusätzlich kann ein elastisches Material gewählt werden. Der Tragarm kann beispielsweise ein metallisches Bauteil sein.

In einer Ausführungsform der Befestigungsanordnung kann es vorgesehen sein, dass der Tragarm flexibler ist als der Axialbereich des Gehäuses zwischen dem rotorseitigen Endbereich und dem zweiten Befestigungsbereich. Alternativ oder zusätzlich kann der Tragarm flexibler sein als der Axialbereich zwischen dem zweiten Befestigungsbereich und dem generatorseitigen Endbereich. Dadurch kann sich der Tragarm vor diesen Bereichen im Betrieb elastisch verformen.

In einer Ausführungsform der Befestigungsanordnung kann es vorgesehen sein, dass ein gehäuseseitiges Ende des Tragarms an dem generatorseitigen Endbereich angeordnet ist. Beispielsweise kann sich der Tragarm, welcher eine Befestigungsschnittstelle in dem zweiten Befestigungsbereich ausbildet, von dem generatorseitigen Endbereich erstrecken. Dieser Tragarm kann sich beispielsweise von dem generatorseitigen Endbereich hin zu dem zweiten Axialbereich erstrecken. Dieser Tragarm kann sich wenigstens teilweise axial erstrecken. Alternativ kann ein Tragarm, welcher eine Befestigungsschnittstelle in dem ersten Befestigungsbereich ausbildet, von dem rotorseitigen Endbereich erstrecken. Dieser Tragarm kann sich beispielsweise von dem rotorseitigen Endbereich hin zu dem ersten Axialbereich erstrecken. Dieser Tragarm kann sich beispielsweise nur radial oder auch wenigstens teilweise axial erstrecken.

In einer Ausführungsform der Befestigungsanordnung kann es vorgesehen sein, dass die Befestigungsschnittstelle in einem Bereich über einer umlaufenden Wand eines Turms der Windkraftanlage angeordnet ist, beispielsweise über einer gondelseitigen Kante der umlaufenden Wand des Turms. Die Befestigungsanordnung kann den Turm der Windkraftanlage aufweisen. Die gondelseitige Kante kann ein oberes Ende der Wand des Turms sein. In einer Draufsicht auf den Turm entlang einer Hocherstreckung des Turms kann die Befestigungsschnittstelle die gondelseitige Kante der umlaufenden Wand des Turms bereichsweise überdecken. In einer Ebene, welche sich orthogonal zu einer Hocherstreckung des Turms erstreckt, kann die Befestigungsschnittstelle wenigstens teilweise die Wand des Turms überlappen. Die Hocherstreckung kann der Längserstreckung des Turms im montierten Zustand entsprechen. In Bezug auf beispielsweise eine Symmetrieachse des Turms, welche der Längsachse entsprechen kann, kann die Befestigungsschnittstelle auf dem gleichen Durchmesser angeordnet sein wie eine obere Kante der Wand des Turms. Lagerkräfte an der Befestigungsschnittstelle, welche in eine Umfangsrichtung des Turms wirken, bewirken so nur sehr geringe Verformungen des Turms und damit auch nur geringe Schwingungen. Lagerkräfte an der Befestigungsschnittstelle, welche in eine Hochrichtung des Turms wirken, beispielsweise aufgrund von Drehmomenten um eine Achse der Rotorwelle, bewirken so ebenfalls nur sehr geringe Verformungen des Turms und damit auch geringe Schwingungen. Die Windkraftanlage kann so im Betrieb weniger Geräusche verursachen und zudem kann eine Belastung des Turms geringer sein oder zumindest bauformgerechter. Beispielsweise kann so auf elastische Elemente im Antriebsstrang zur Schwingungsreduktion, wie eine Verbindung der Rotorwelle mit der Getriebeeingangswelle über elastische Bolzen, verzichtet werden. Dadurch kann der Antriebsstrang besonders zuverlässig und wartungsarm sein.

In einer Ausführungsform der Befestigungsanordnung kann es vorgesehen sein, dass die Befestigungsanordnung den Antriebsstrang aufweist, welcher gemäß der obigen Ausführungen ausgebildet sein kann.

Ein zweiter Aspekt betrifft eine Windkraftanlage, welche die Befestigungsanordnung gemäß dem ersten Aspekt aufweist. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Die Windkraftanlage kann den Turm, die Gondel und den Antriebsstrang aufweisen. Der Antriebsstrang kann mittels der Befestigungsanordnung an der Gondel befestigt sein.

### Kurze Beschreibung der Figuren

Fig. 1 veranschaulicht schematisch eine Windkraftanlage mit einem Antriebsstrang.
Fig. 2 veranschaulicht schematisch bei einer Befestigungsanordnung für den Antriebsstrang eine Position von Befestigungsbereichen eines Gehäuses relativ zu Lagern für eine Rotorwelle der Windkraftanlage.
Fig. 3 veranschaulicht schematisch in einer Draufsicht von oben eine Positionierung von Befestigungsschnittstellen des Gehäuses an einer Gondel der Windkraftanlage relativ zu einem Turm der Windkraftanlage, wobei das Gehäuse nur teilweise dargestellt ist.
Fig. 4 veranschaulicht schematisch in einer Perspektivansicht das Gehäuse, wobei das Gehäuse nur teilweise dargestellt ist.
Fig. 5 veranschaulicht schematisch eine Ausführungsform der Befestigungsanordnung in einer Draufsicht von oben, wobei das Gehäuse nur teilweise dargestellt ist.
Fig. 6 veranschaulicht schematisch eine Ausführungsform der Befestigungsanordnung in einer Draufsicht von oben, wobei das Gehäuse nur teilweise dargestellt ist.

### Detaillierte Beschreibung von Ausführungsformen

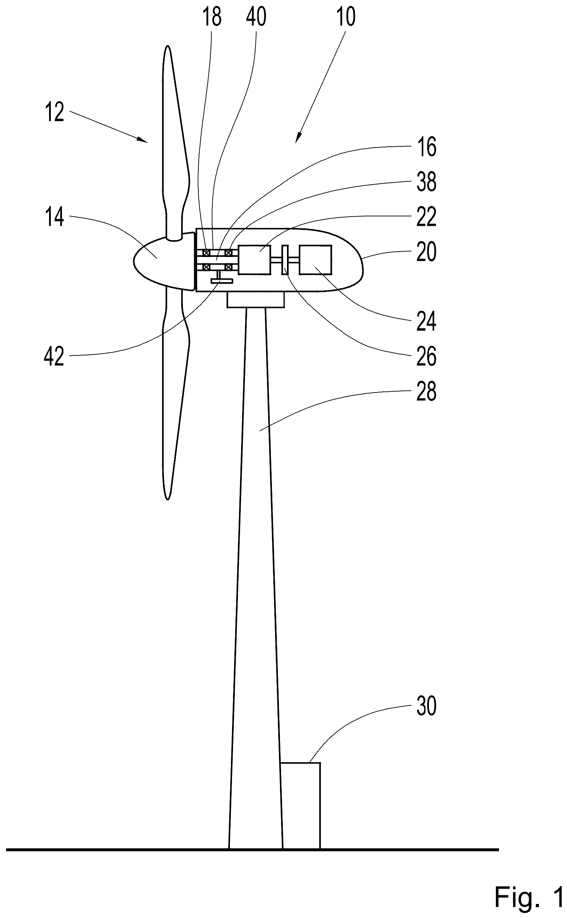

Fig. 1 veranschaulicht eine Windkraftanlage 10 mit einem Antriebsstrang in Horizontalbauweise. Die Windkraftanlage 10 weist einen Rotor 12 auf, welcher über eine Nabe 14 an einer Rotorwelle 16 gehalten ist. Die Drehachse der Rotorwelle 16 erstreckt sich im Wesentlichen horizontal. Die Rotorwelle 16 ist über zwei Wälzlager 18, 38 in einer Gondel 20 gelagert. Dafür ist ein Gehäuse 40 vorgesehen, welches an einem Maschinenbett 42 der Gondel 20 befestigt ist. Die Rotorwelle 16 ist über ein Getriebe 22 mechanisch mit einem Generator 24 wirkverbunden. In der Wirkverbindung zwischen Getriebe 22 und Generator 24 ist noch eine Bremse 26 angeordnet, welche auf eine Eingangswelle des Generators 24 wirkt. Die Gondel 20 ist drehbar an einem oberen Ende eines Turms 28 gelagert, welcher am Boden verankert ist. Die Windkraftanlage 10 ist in einer weiteren Ausführungsform als Off-Shore Anlage ausgebildet. Neben dem Turm 28 weist die Windkraftanlage 10 einen Netzanschluss 30 auf. Ein erstes der Wälzlager 18 ist dem Rotor 12 zugewandt und wird auch als rotorseitiges Lager 18 bezeichnet. Ein zweites der Wälzlager 38 ist dem Generator 24 zugewandt und wird auch als rotorseitiges Lager 18 bezeichnet.

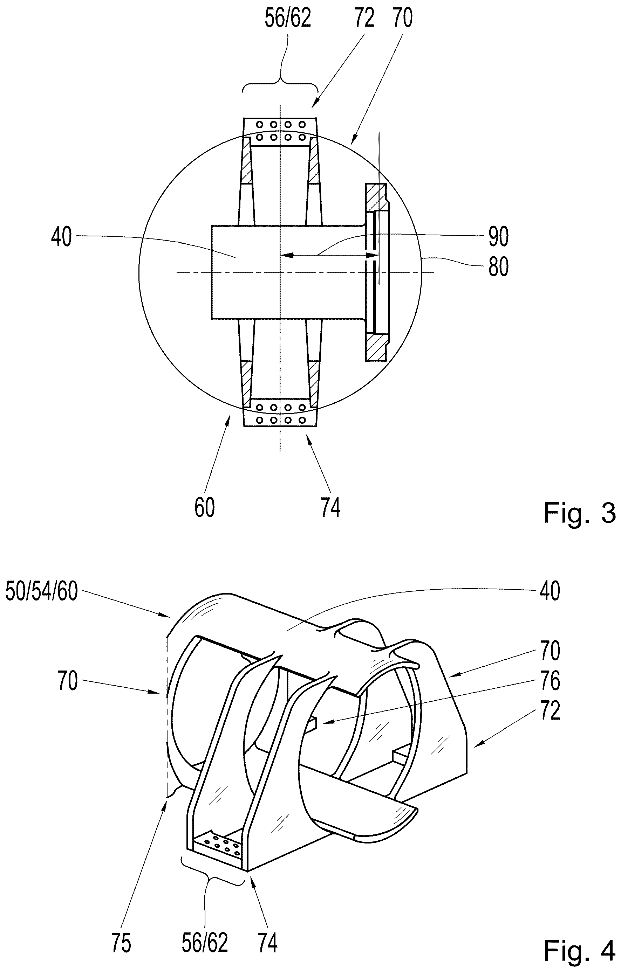

In Fig. 1 ist das Gehäuse 40 an dem Maschinenbett 42 in einer Richtung, die orthogonal zu einer Hocherstreckung des Turms 28 ist, beabstandet zum Turm 28 angeordnet gezeigt. Dadurch werden viele wirkende Lasten quer zu der Hocherstreckung und auch Umfangserstreckung des Turms 28 eingeleitet. Figs. 3, 5 und 6 veranschaulichen eine Befestigungsanordnung für den Antriebsstrang der Windkraftanlage 10, bei welcher Lasten günstiger in den Turm 28 eingeleitet werden. Das Gehäuse 40 ist dabei beispielsweise wenigstens teilweise über dem Turm 28 angeordnet. Das Gehäuse 40 ist in den gezeigten Ausführungsformen einstückig ausgebildet.

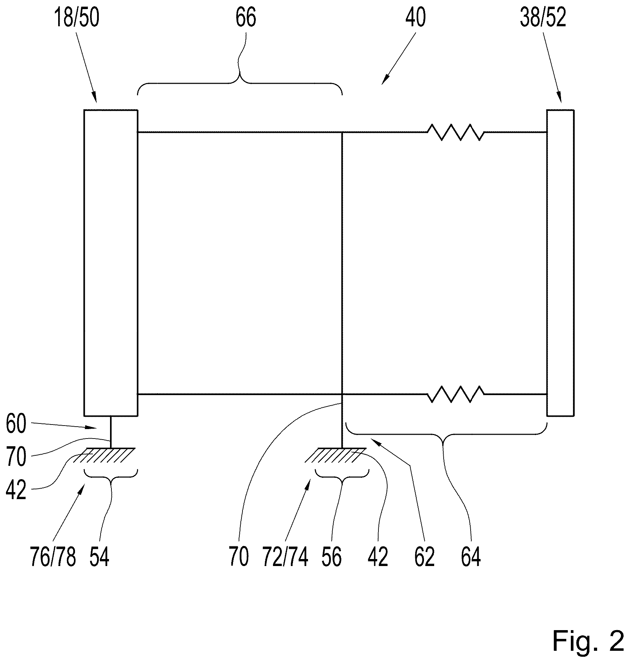

Fig. 2 veranschaulicht eine Befestigungsanordnung für das Gehäuse 40 an dem Maschinenbett 42. In Fig. 2 ist links ein axialer und rotorseitiger Endbereich 50 des Gehäuses 40 dargestellt, welcher somit dem Rotor 12 zugewandt ist. In dem rotorseitigen Endbereich 50 ist das erste Wälzlager 18 in dem Gehäuse 40 angeordnet und stützt sich mit seinem Außenring wenigstens radial daran ab. Rechts ist ein axialer und generatorseitiger Endbereich 52 dargestellt, welcher somit dem Generator 24 zugewandt ist. In dem generatorseitigen Endbereich 52 ist das zweite Wälzlager 38 in dem Gehäuse 40 angeordnet und stützt sich mit seinem Außenring wenigstens radial daran ab. Mittig weist das Gehäuse 40 eine axiale Durchgangsöffnung auf, in welcher die Rotorwelle 16 angeordnet ist. Die axiale und radiale Drehrichtung ist durch die Drehachse der beiden Wälzlager 18, 38 und der Rotorwelle 16 definiert, welche sich in der Bildebene von Fig. 2 waagerecht von links nach rechts mittig erstreckt. Die Befestigungsanordnung weist einen ersten Befestigungsbereich 60 in einem ersten Axialbereich 54 und einen zweiten Befestigungsbereich 62 in einem zweiten Axialbereich 56 auf. Die beiden Axialbereiche 54, 56 und damit auch die beiden Befestigungsbereiche 60, 62 sind zueinander beabstandet. Das Gehäuse 40 ist nur in den beiden Befestigungsbereichen 60, 62 an der Gondel 20 der Windkraftanlage 10 befestigt, hier über das Maschinenbett 42 der Gondel 20.

Der zweite Axialbereich 56 und damit auch der zweite Befestigungsbereich 62 sind zu dem generatorseitigen Endbereich 52 und damit auch dem zweiten Wälzlager 38 axial beabstandet. Es ergibt sich also ein axialer Versatz zwischen dem zweiten Befestigungsbereich 62 und dem zweiten Wälzlager 38, welcher in Figs. 3, 5 und 6 durch Pfeil 90 veranschaulicht ist. Der erste Axialbereich 54 und damit auch der erste Befestigungsbereich 60 ist im gleichen Axialbereich wie der rotorseitige Endbereich 50 und damit auch das erste Wälzlager 18 angeordnet. Das Gehäuse 40 ist in einem Axialbereich 64 zwischen dem zweiten Befestigungsbereich 62 und dem generatorseitigen Endbereich 52 flexibel ausgebildet. Das Gehäuse 40 ist in einem Axialbereich 66 zwischen dem rotorseitigen Endbereich 50 und dem zweiten Befestigungsbereich 62 steif ausgebildet. Das Gehäuse 40 ist in dem Axialbereich 64 zwischen dem zweiten Befestigungsbereich 62 und dem generatorseitigen Endbereich 52 flexibler als in dem Axialbereich 66 zwischen dem rotorseitigen Endbereich 50 und dem zweiten Befestigungsbereich 62. Die Flexibilität variiert bei der in Fig. 3 und Fig. 4 gezeigten Ausführungsform dadurch, dass das Gehäuse 40 Durchbrüche aufweist. Zudem sind Tragarme 70 in dem ersten Befestigungsbereich 60 anders gestaltet als in dem zweiten Befestigungsbereich 62. Die Tragarme 70 bilden Befestigungsschnittstellen 72, 74, 76, 78.

Die Befestigungsanordnung weist eine erste Befestigungsschnittstelle 72, eine zweite Befestigungsschnittstelle 74, eine dritte Befestigungsschnittstelle 76 und eine vierte Befestigungsschnittstelle 78 auf, welche von dem Gehäuse 40 beabstandet sind und jeweils mit dem Gehäuse 40 durch Tragarme 70 verbunden sind. Die vier Befestigungsschnittstellen 72, 74, 76, 78 sind alle antriebsseitige Befestigungsschnittstellen 72, 74, 76, 78 und liegen an korrespondierenden gondelseitigen Befestigungsschnittstellen des Maschinenbetts 42 auf, sind zur Befestigung festgeschraubt und verbinden so den Antriebsstrang mit der Gondel 20. Dazu weisen die vier Befestigungsschnittstellen 72, 74, 76, 78 unterseitig eine plane Auflagefläche und Durchgangsöffnungen auf. In anderen Ausführungsformen weist die Auflagefläche der Befestigungsschnittstellen 72, 74, 76, 78 Absätze auf. In den gezeigten Ausführungsformen ist der Antriebsstrang nur über diese vier Befestigungsschnittstellen 72, 74, 76, 78 an der Gondel 20 montiert. In anderen Ausführungsformen gibt es weitere Befestigungsschnittstellen. Die vier Befestigungsschnittstellen 72, 74, 76, 78 sind jeweils über einen zugeordneten Tragarm 70 mit dem Gehäuse 40 verbunden. Das Gehäuse 40 ist mit den Tragarmen 70 hier einstückig ausgebildet. In Fig. 2 und Fig. 3 erstreckt sich die Drehachse der Rotorwelle 16 in der Bildebene von links nach rechts.

In Fig. 3 ist weiterhin eine gondelseitige Kante 80 einer umlaufenden Wand des Turms 28 veranschaulicht. Die gondelseitige Kante 80 wird durch ein oberseitiges und damit gondelseitiges Ende des Turms 28 gebildet, das vorliegend eine Stirnfläche des Turms 28 ausbildet. Die erste und die zweite Befestigungsschnittstelle 72, 74 sind in Höhenrichtung des Turms 28 jeweils in einem Bereich über der gondelseitigen Kante 80 der umlaufenden Wand des Turms 28 angeordnet. In der Hocherstreckung des Turms 28 sind die erste und die zweite Befestigungsschnittstelle 72, 74 also direkt über der gondelseitigen Kante 80 der umlaufenden Wand des Turms 28 angeordnet. Zudem erstreckt sich eine Haupterstreckungsrichtung der ersten und der zweiten Befestigungsschnittstelle 72, 74 tangential zu der umlaufenden Wand des Turms 28. Die Haupterstreckungsrichtung entspricht dabei einer Symmetrielinie zwischen den zwei Reihen von Durchgangsöffnungen an der ersten und der zweiten Befestigungsschnittstelle 72, 74 und verläuft parallel zwischen den längeren Seiten der hier rechteckig geformten Auflagefläche. Ein befestigungsschnittstellenseitiger Endbereich der zwei zugeordneten Tragarme 70 erstreckt sich orthogonal zu dieser Haupterstreckungsrichtung. Die dritte und vierte Befestigungsschnittstelle 76, 78 ist zu der gondelseitigen Kante 80 der umlaufenden Wand des Turms 28 beabstandet angeordnet.

Die Tragarme 70 für die erste und zweite Befestigungsschnittstelle 72, 74 erstrecken sich in einer Draufsicht (vgl. Fig. 3) orthogonal und damit radial zu der Drehachse der Rotorwelle 16 und sind in dem zweiten Axialbereich 56 mit dem Gehäuse 40 verbunden. Diese Tragarme 70 sind in der Ausführungsform von Fig. 3 und Fig. 4 durch zwei axial beabstandete Arme gebildet, welche keine axiale Erstreckung zwischen den Befestigungsschnittstellen 72, 74 und dem Gehäuse 40 aufweisen. Die Tragarme 70 für die erste und zweite Befestigungsschnittstelle 72, 74 sind also mit deren befestigungsschnittstellenseitigem Ende und deren gehäuseseitigem Ende in dem gleichen Axialbereich angeordnet, hier nämlich dem zweiten Axialbereich 56. Die Tragarme 70 für die dritte und vierte Befestigungsschnittstelle 76, 78 erstrecken sich orthogonal zu der Drehachse der Rotorwelle 16 und sind in dem ersten Axialbereich 54 mit dem Gehäuse 40 verbunden (vgl. Fig. 3). Entsprechend enden Tragarme 70 für die dritte und vierte Befestigungsschnittstelle 76, 78 beidseitig in dem ersten Axialbereich 54 Diese Tragarme 70 sind durch jeweils einen Arm gebildet. Die Tragarme 70 für die dritte und vierte Befestigungsschnittstelle 76, 78 sind massiver und steifer als die im Vergleich dazu flexibleren zwei beabstandeten Arme der Tragarme 70 für die erste und zweite Befestigungsschnittstelle 72, 74.

Die vier Befestigungsschnittstellen 72, 74, 76, 78 sind in einer Ebene, welche sich orthogonal zu der Hocherstreckung des Turms 28 erstreckt, von der Drehachse der Rotorwelle 16 der Windkraftanlage 10 beabstandet. Diese Ebene entspricht der Bildebene von Figs. 3, 5 und 6.

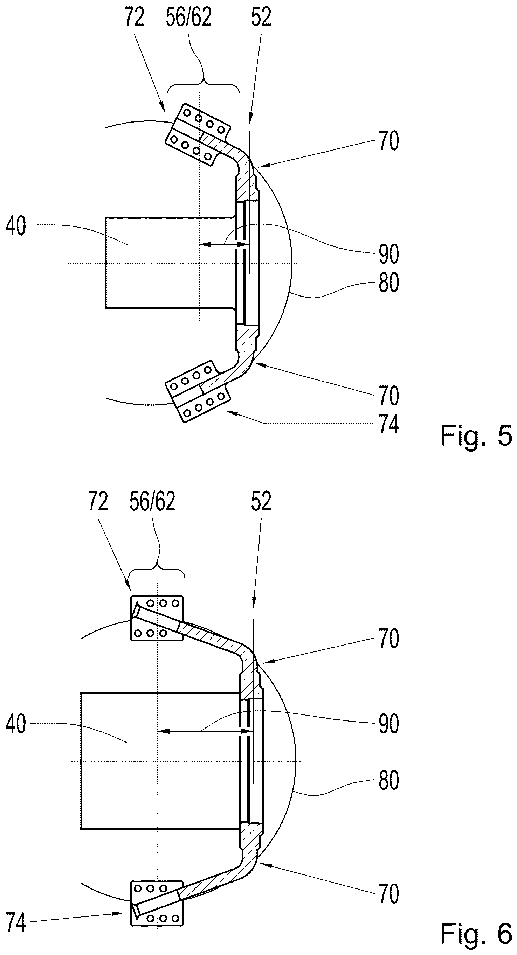

In Fig. 5 ist eine zweite Ausführungsform der Befestigungsanordnung gezeigt, welche ähnlich zu der zuvor beschriebenen Ausführungsform ist. Es werden nur Unterschiede erläutert. Die Tragarme 70 für die erste und zweite Befestigungsschnittstelle 72, 74 erstrecken sich nun von dem generatorseitigen Endbereich 52 des Gehäuses weg. Die Tragarme 70 erstrecken sich dabei zunächst radial innerhalb des generatorseitigen Endbereichs 52 bis zu einem Knick. Nach dem Knick erstrecken sich diese Tragarme 70 dann auch mit einem axialen Anteil bis zu der ersten bzw. zweiten Befestigungsschnittstelle 72, 74. Dieser Teilbereich dieser Tragarme 70 nach dem Knick erstreckt sich im Bereich der Befestigungsschnittstellen 72, 74 tangential zu der gondelseitigen Kante 80 der umlaufenden Wand des Turms 28. Die Tragarme 70 für die erste und zweite Befestigungsschnittstelle 72, 74 sind bei dieser Ausführungsform also axial mit einem gehäuseseitigen Ende in dem generatorseitigen Endbereich 52 und mit einem befestigungsschnittstellenseitigen Ende in dem zweiten Axialbereich 56 angeordnet. Diese Tragarme 70 sind auch nicht doppelarmig ausgebildet, sondern weisen jeweils nur einen Arm auf.

In der Ausführungsform von Fig. 3 sind die erste und zweite Befestigungsschnittstelle 72, 74 in einer 12 Uhr und 6 Uhr Position in der Draufsicht auf den Turm 28 angeordnet, sofern davon ausgegangen wird, dass sich die Drehachse der Rotorwelle 16 durch die 9 Uhr und 3 Uhr Position erstreckt. In der Ausführungsform von Fig. 5 sind die erste und zweite Befestigungsschnittstelle 72, 74 dagegen in der 1 Uhr und 5 Uhr Position angeordnet. Der Versatz zwischen dem zweiten Befestigungsbereich 62 und dem generatorseitigen Endbereich 52 des Gehäuses 40 ist somit kleiner.

In Fig. 6 ist eine dritte Ausführungsform der Befestigungsanordnung gezeigt, welche ähnlich zu den beiden zuvor beschriebenen Ausführungsform ist. In der Draufsicht befinden sich die erste und zweite Befestigungsschnittstelle 72, 74 in der 12 Uhr und 6 Uhr Position, wie bei der Ausführungsform von Fig. 3. Der Versatz zwischen dem zweiten Befestigungsbereich 62 und dem generatorseitigen Endbereich 52 des Gehäuses 40 ist somit so groß wie bei der Ausführungsform von Fig. 3. Die Tragarme 70 für die erste und zweite Befestigungsschnittstelle 72, 74 sind aber wie bei der Ausführungsform von Fig. 5 in dem generatorseitigen Endbereich 52 mit dem Gehäuse 40 verbunden. Diese Tragarme 70 sind zudem ebenfalls einarmig ausgebildet. Die Tragarme 70 erstrecken sich ebenfalls zunächst innerhalb des generatorseitigen Endbereichs 52 bis zu einem Knick orthogonal zu der Drehachse der Rotorwelle 16. Nach dem Knick erstrecken sich diese Tragarme 70 dann auch mit einem axialen Anteil bis zu der ersten bzw. zweiten Befestigungsschnittstelle 72, 74. Dieser Teilbereich dieser Tragarme 70 nach dem Knick erstreckt sich im Bereich der Befestigungsschnittstellen 72, 74 allerdings nicht tangential zu der gondelseitigen Kante 80 der umlaufenden Wand des Turms 28, sondern gewinkelt zur Tangentialrichtung.

### Bezugszeichen

- 10: Windkraftanlage
- 12: Rotor
- 14: Nabe
- 16: Rotorwelle
- 18: Wälzlager
- 20: Gondel
- 22: Getriebe
- 24: Generator
- 26: Bremse
- 28: Turm
- 30: Netzanschluss
- 38: Wälzlager
- 40: Gehäuse
- 42: Maschinenbett
- 50: Endbereich
- 52: Generatorseitiger Endbereich
- 54: Erster Axialbereich
- 56: Zweiter Axialbereich
- 60: Erster Befestigungsbereich
- 62: Zweiter Befestigungsbereich
- 64: Axialbereich
- 66: Axialbereich
- 70: Tragarme
- 72: Erste Befestigungsschnittstelle
- 74: Zweite Befestigungsschnittstelle
- 76: Dritte Befestigungsschnittstelle
- 78: Vierte Befestigungsschnittstelle
- 80: Kante
- 90: Pfeil

## Patentansprüche

1. Befestigungsanordnung zum Befestigen eines Antriebsstrangs an einer Windkraftanlage (10), wobei die Befestigungsanordnung ein Gehäuse (40), ein erstes Lager (18) und ein zweites Lager (38) aufweist, wobei eine Rotorwelle (16) mittels der zwei Lager (18, 38) drehbar an dem Gehäuse (40) gelagert ist, wobei das erste Lager (18) axial an einem rotorseitigen Endbereich (50) des Gehäuses (40) angeordnet ist, wobei das zweite Lager (38) axial an einem generatorseitigen Endbereich (52) des Gehäuses (40) angeordnet ist, wobei die Befestigungsanordnung einen ersten Befestigungsbereich (60) in einem ersten Axialbereich (54) und einen zweiten Befestigungsbereich (62) in einem zweiten Axialbereich (56) aufweist, wobei das Gehäuse (40) an den Befestigungsbereichen an einer Gondel (20) der Windkraftanlage (10) befestigbar ist, und wobei der zweite Axialbereich (56) zu dem generatorseitigen Endbereich (52) axial beabstandet ist.

2. Befestigungsanordnung nach Anspruch 1, **dadurch gekennzeichnet, dass** das Gehäuse (40) in einem Axialbereich (64) zwischen dem zweiten Befestigungsbereich (62) und dem generatorseitigen Endbereich (52) flexibel ausgebildet ist.

3. Befestigungsanordnung nach Anspruch 2, **dadurch gekennzeichnet, dass** das Gehäuse (40) in dem Axialbereich (64) zwischen dem zweiten Befestigungsbereich (62) und dem generatorseitigen Endbereich (52) flexibler ist als in einem Axialbereich (66) zwischen dem rotorseitigen Endbereich (50) und dem zweiten Befestigungsbereich (62) ausgebildet ist.

4. Befestigungsanordnung nach Anspruch 2 oder 3, **dadurch gekennzeichnet, dass** eine Flexibilität des Gehäuses (40) durch Durchbrüche vorgegeben ist.

5. Befestigungsanordnung nach einem der vorhergehenden Ansprüche, **dadurch gekennzeichnet, dass** die Befestigungsanordnung wenigstens eine Befestigungsschnittstelle (72, 74, 76, 78) in jedem Befestigungsbereich (60, 62) ausbildet, wobei wenigstens eine der Befestigungsschnittstellen (72, 74, 76, 78) über einen Tragarm (70) mit dem Gehäuse (40) verbunden ist.

6. Befestigungsanordnung nach Anspruch 5, **dadurch gekennzeichnet, dass** der Tragarm (70) flexibel ausgebildet ist.

7. Befestigungsanordnung nach Anspruch 6, **dadurch gekennzeichnet, dass** der Tragarm (70) flexibler als der Axialbereich (66) des Gehäuses (40) zwischen dem rotorseitigen Endbereich (50) und dem zweiten Befestigungsbereich (62) ist.

8. Befestigungsanordnung nach einem der Ansprüche 5 bis 7, **dadurch gekennzeichnet, dass** ein gehäuseseitiges Ende des Tragarms (70) an dem generatorseitigen Endbereich (52) angeordnet ist.

9. Befestigungsanordnung nach einem der Ansprüche 5 bis 8, **dadurch gekennzeichnet, dass** die Befestigungsanordnung einen Turm (28) der Windkraftanlage aufweist und die Befestigungsschnittstelle (72, 74, 76, 78) in einem Bereich über einer umlaufenden Wand eines Turms (28) der Windkraftanlage (10) angeordnet ist.

10. Windkraftanlage (10) mit einer Befestigungsanordnung nach einem der vorhergehenden Ansprüche.
